# EUROPEAN PATENT APPLICATION

(11) **EP 2 819 460 A1**
(43) Date of publication of application: **31.12.2014**
(21) Application number: 13776332.2
(22) Date of filing: 02.02.2013
(51) Int. Cl.: H04W 36/04

(54) **METHOD FOR PROCESSING MESSAGE BETWEEN MICRO CELL AND MACRO CELL, BASE STATION GATEWAY, AND SYSTEM**

(30) Priority: 10.04.2012 CN 201210103247
(71) Applicant: Huawei Technologies Co., Ltd., Shenzhen, Guangdong 518129 (CN)
(72) Inventor: XU, Min, Shenzhen Guangdong 518129 (CN); CHEN, Dong, Shenzhen Guangdong 518129 (CN)
(74) Representative: Lord, Michael
(86) International application number: PCT/CN2013/071303
(87) International publication number: WO 2013/152637

(57) **Abstract**

Embodiments of the present invention disclose a method for processing a message between a micro cell and a macro cell, a base station gateway, and a system, which relate to the communications field and solves problems that a service message cannot be correctly processed due to a repeatedly used ID and a service process is disorderly implemented. The method of the present invention includes: allocating, by a base station gateway, a dedicated transmission channel to a micro cell base station that is managed by the base station gateway, where the transmission channel is configured to perform message transfer between the micro cell base station and a corresponding macro cell node; and transferring a message of the micro cell base station through the transmission channel. The embodiments of the present invention mainly apply to a process of processing a message between a micro cell and a macro cell.

## Description

This application claims priority to Chinese Patent Application No. 201210103247.7, filed with the Chinese Patent Office on April 10, 2012 and entitled "METHOD FOR PROCESSING MESSAGE BETWEEN MICRO CELL AND MACRO CELL, BASE STATION GATEWAY, AND SYSTEM", which is incorporated herein by reference in its entirety.

### TECHNICAL FIELD

The present invention relates to the communications field, and in particular, to a method for processing a message between a micro cell and a macro cell, a base station gateway, and a system.

### BACKGROUND

The wireless communications field faces pressure from explosive growth of data services. In order to increase a network capacity and reduce transmission costs, a heterogeneous network (Heterogeneous Network, Hetnet) technology is proposed in the industry. The Hetnet is formed by multiple cells in different sizes and of different types, including a macro cell (Macro cell) and a micro cell, where the micro cell includes: a micro cell (Micro cell), a pico cell (Pico Cell), a femto cell (Femto Cell), a remote radio head (Remote Radio Head, RRH) type cell, and the like. Deploying more micro cells for a region with dense traffic may effectively increase the network capacity in the region. Moreover, the micro cell has a small scale and lower construction costs (Capital Expenditure, Capax) and operating expense (Operating Expense, OPEX); therefore, many carriers attach importance to the Hetnet and the Hetnet is an important direction in which a wireless network evolves.

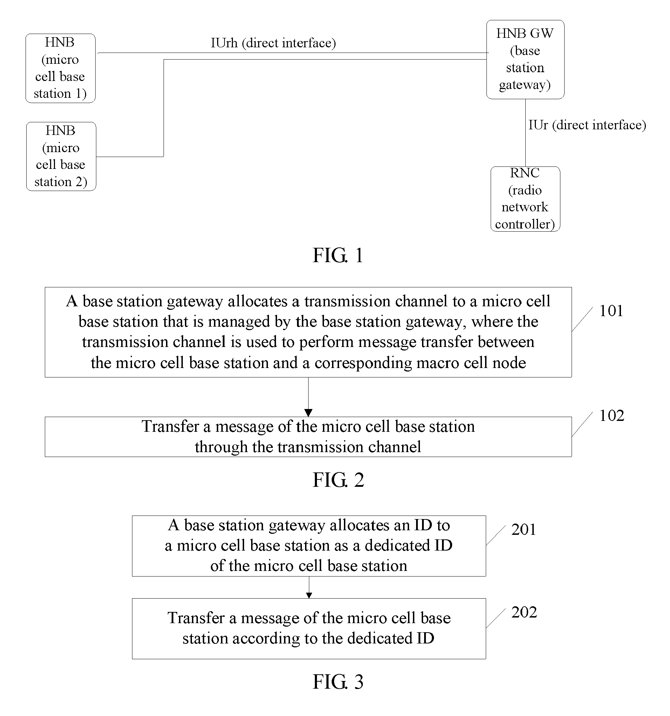

An architecture of the micro cell and macro cell is shown in FIG. 1. A micro cell base station (HNB) is connected to a macro cell node (radio network controller (Radio Network Controller, RNC)) by using a base station gateway (HNB-GW), where the base station gateway plays a role of collecting and forwarding a message between the micro cell base station and the macro cell node. An Iurh interface between the micro cell base station and the base station gateway and an Iur interface between the base station gateway and the RNC both belong to a direct interface. Messages transmitted through the direct interface are mainly RNSAP (Radio Network Subsystem Application Part, radio network subsystem application part) messages, which are all directly processed by the RNC. In an HNB system, the HNB implements an RNC function; therefore, the base station gateway (HNB-GW) only needs to forward the RNSAP message transmitted between the HNB and the RNC.

The RNSAP message altogether has two categories: connection-based message and non-connection-based message. The connection-based message indicates that a corresponding RNSAP message needs to be transferred on a dedicated transmission connection; the non-connection-based message indicates that a corresponding RNSAP message is transferred on a public transmission connection. For a UE-related connection-based message, the HNB-GW may transfer the message according to a mapping relationship of a dedicated transmission connection that is established for each UE and is between the HNB-GW and the RNC.

However, for some cell-related connection-based messages, such as a message of a public measurement process and an information exchange process, in the prior art, multiple HNBs are connected to one HNB-GW Only one SCCP (Signaling Connection Control Part, signaling connection control part) connection is separately established between the HNB-GW, which serves as an RNC for other devices, and the macro cell RNC for the public measurement process message and the information exchange process message. When multiple HNBs initiate these processes, it is possible that a Transaction transaction ID or Measurement measurement ID or Information exchange information exchange ID is repeatedly used in a message service message. That is, multiple HNBs use the same ID to send a related RNSAP message to the RNC. However, the RNC needs to perform reply to a measurement or/and information exchange message according to different IDs. If the IDs are repeatedly used, the RNC processes only a newly received measurement or information exchange request corresponding to the ID. In this case, a related measurement or information exchange message that is previously initiated by another HNB cannot to be processed or replied to.

In conclusion, when multiple micro cell base stations are connected to the same base station gateway and each micro cell base station separately implements a different service process, each micro cell base station selects, by itself, an ID for implementing a corresponding service process; therefore, it is possible that service process IDs selected by the multiple micro cell base stations are repeatedly used. That is, the RNC receives service messages from the multiple micro cell base stations that use the same ID, but the RNC implements and replies to the service messages only according to the ID. When receiving the service messages with the same ID, the RNC considers them as the same service message, which causes problems that the service messages cannot to be correctly processed due to the repeatedly used ID and the service process is disorderly implemented.

### SUMMARY

Embodiments of the present invention provide a method for processing a message between a micro cell and a macro cell, a base station gateway, and a system, that solves problems that a service message cannot be correctly processed due to a repeatedly used ID and a service process is disorderly implemented.

One aspect of the present invention provides a method for processing a message between a micro cell and a macro cell, that is applied on a base station gateway side, including:
allocating, by a base station gateway, a transmission channel to a micro cell base station that is managed by the base station gateway, where the transmission channel is used to perform message transfer between the micro cell base station and a corresponding macro cell node; and
transferring a message of the micro cell base station through the transmission channel.

Another aspect of the present invention provides a method for processing a message between a micro cell and a macro cell, which is applied on a micro cell base station side, including:
adding, by a micro cell base station, a micro cell feature to a message to be sent; and
sending the message carrying the micro cell feature to a corresponding macro cell node by using a base station gateway, so that the macro cell node processes and replies to the message according to the micro cell feature.

Another aspect of the present invention provides a base station gateway, including:
an allocating unit, configured to allocate a transmission channel to a micro cell base station that is managed by the base station gateway, where the transmission channel is used to perform message transfer between the micro cell base station and a corresponding macro cell node; and
a transferring unit, configured to transfer a message of the micro cell base station through the transmission channel.

Another aspect of the present invention provides a micro cell base station, including:
a writing-in unit, configured to add a micro cell feature to a message to be sent; and
a sending unit, configured to send a message carrying the micro cell feature to a corresponding macro cell node by using a base station gateway, so that the macro cell node processes and replies to the message according to the micro cell feature.

Another aspect of the present invention provides a system for processing a message between a micro cell and a macro cell, including a base station gateway, a micro cell base station connected to the base station gateway, and a macro cell node connected to the base station gateway, where
the base station gateway is configured to allocate a transmission channel to the micro cell base station that is managed by the base station gateway, where the transmission channel is used to perform message transfer between the base station gateway and a corresponding macro cell node; and transfer a message of the micro cell base station through the transmission channel.

Another aspect of the present invention provides a system for processing a message between a micro cell and a macro cell, including a micro cell base station, a base station gateway connected to the micro cell base station, and a macro cell node connected to the base station gateway, where
the micro cell base station is configured to add a micro cell feature to a message to be sent and send, by using the base station gateway, the message carrying the micro cell feature to a corresponding macro cell node, so that the macro cell node processes and replies to the message according to the micro cell feature.

The method for processing a message between the micro cell and the macro cell, the base station gateway, and the system provided by the embodiments of the present invention may prevent a failure of the macro cell node to correctly process the message caused by repeatedly used a same ID by multiple base stations, so that the message between the micro cell and macro cell can be correctly processed.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of an architecture of a micro cell and a macro cell in the prior art;
FIG. 2 is a method for processing a message between a micro cell and a macro cell according to Embodiment 1 of the present invention;
FIG. 3 is a method for processing a message between a micro cell and a macro cell according to Embodiment 2 of the present invention;
FIG. 4 is another method for processing a message between a micro cell and a macro cell according to Embodiment 2 of the present invention;
FIG. 5 is another method for processing a message between a micro cell and a macro cell according to Embodiment 2 of the present invention;
FIG. 6 is another method for processing a message between a micro cell and a macro cell according to Embodiment 2 of the present invention;
FIG. 7 is a method for processing a message between a micro cell and a macro cell according to Embodiment 3 of the present invention;
FIG. 8 is another method for processing a message between a micro cell and a macro cell according to Embodiment 3 of the present invention;
FIG. 9 is another method for processing a message between a micro cell and a macro cell according to Embodiment 3 of the present invention;
FIG. 10 is a method for processing a message between a micro cell and a macro cell according to Embodiment 4 of the present invention;
FIG. 11 is a method for processing a message between a micro cell and a macro cell according to Embodiment 5 of the present invention;
FIG. 12 is another method for processing a message between a micro cell and a macro cell according to Embodiment 5 of the present invention;
FIG. 13 is another method for processing a message between a micro cell and a macro cell according to Embodiment 5 of the present invention;
FIG. 14 is a schematic composition diagram of a base station gateway according to Embodiment 6 of the present invention;
FIG. 15 is a schematic composition diagram of another base station gateway according to Embodiment 6 of the present invention;
FIG. 16 is a schematic composition diagram of another base station gateway according to Embodiment 6 of the present invention;
FIG. 17 is a schematic composition diagram of another base station gateway according to Embodiment 6 of the present invention;
FIG. 18 is a schematic composition diagram of another base station gateway according to Embodiment 6 of the present invention;
FIG. 19 is a schematic composition diagram of another base station gateway according to Embodiment 6 of the present invention;
FIG. 20 is a schematic composition diagram of a micro cell base station according to Embodiment 6 of the present invention;
FIG. 21 is a schematic composition diagram of another micro cell base station according to Embodiment 6 of the present invention;
FIG. 22 is a schematic composition diagram of a system for processing a message between a micro cell and a macro cell according to Embodiment 6 of the present invention;
FIG. 23 is a schematic composition diagram of another system for processing a message between a micro cell and a macro cell according to Embodiment 6 of the present invention;
FIG. 24 is a schematic composition diagram of another system for processing a message between a micro cell and a macro cell according to Embodiment 6 of the present invention; and
FIG. 25 is a schematic composition diagram of another system for processing a message between a micro cell and a macro cell according to Embodiment 6 of the present invention.

### DESCRIPTION OF EMBODIMENTS

In the following description, to illustrate rather than limit, specific details such as particular system structure, interface, and technology are provided to make a better understanding of the present invention. However, it should be understood by persons skilled in the art that the present invention can also be implemented in other embodiments without the specific details. In other situations, detail descriptions of well known apparatus, circuit and method are omitted, so that the present invention is described without being disturbed by the unnecessary details.

Technologies described in this document may apply to various communications systems, for example, current 2G and 3G communications systems and a next-generation communications system, for example, a Global System for Mobile Communications (GSM, Global System for Mobile communications), a Code Division Multiple Access (CDMA, Code Division Multiple Access) system, a Time Division Multiple Access (TDMA, Time Division Multiple Access) system, a Wideband Code Division Multiple Access (WCDMA, Wideband Code Division Multiple Access Wireless) system, a Frequency Division Multiple Access (FDMA, Frequency Division Multiple Addressing) system, an Orthogonal Frequency-Division Multiple Access (OFDMA, Orthogonal Frequency-Division Multiple Access) system, a single-carrier FDMA (SC-FDMA) system, a General Packet Radio Service (GPRS, General Packet Radio Service) system, a Long Term Evolution (LTE, Long Term Evolution) system, and other communications systems.

Various aspects are described in the specification with reference to a user equipment and/or a base station and/or a base station controller.

The user equipment may be a radio terminal or a wired terminal. The radio terminal may refer to a device that provides a user with voice and/or data connectivity, a handheld device with a radio connection function, or another processing device connected to a radio modem. A wireless terminal may communicate with one or more core networks through a radio access network (for example, RAN, Radio Access Network). The user equipment may be a mobile terminal, such as a mobile phone, (which may also be referred to as a "cell" phone), a computer having a mobile terminal, for example, a portable, pocket-sized, handheld, computer built-in, or vehicle-mounted mobile apparatus, which exchange voice and/or data with a radio access network. For example, it may be a device such as a personal communication service (PCS, Personal Communication Service) phone, a cordless telephone set, a Session Initiation Protocol (SIP) phone, a wireless local loop (WLL, Wireless Local Loop) station, and a personal digital assistant (PDA, Personal Digital Assistant). The wireless terminal may also be called a system, a subscriber unit (Subscriber Unit), a subscriber station (Subscriber Station), a mobile station (Mobile Station), a mobile terminal (Mobile), a remote station (Remote Station), an access point (Access Point), a remote terminal (Remote Terminal), an access terminal (Access Terminal), a user terminal (User Terminal), a user agent (User Agent), a user device (User Device), or a user equipment (User Equipment).

The base station (for example, an access point) may refer to an apparatus in communication with a wireless terminal via one or more sectors at an over-the-air interface in an access network. The base station may be configured to mutually convert a received over-the-air frame and an IP packet and serve as a router between the wireless terminal and a rest portion of the access network, where the rest portion of the access network may include an Internet protocol (IP) network. The base station may also coordinate attribute management of the over-the-air interface. For example, the base station may be a base station in the GSM or the CDMA (BTS, Base Transceiver Station), may also be a base station in the WCDMA (NodeB), and may further be an evolved NodeB in the LTE (NodeB, eNB, or e-NodeB, evolutional Node B), which is not limited in the present invention.

The base station controller may be a base station controller (BSC, base station controller) in the GSM or CDMA, or a radio network controller (RNC, Radio Network Controller) in the WCDMA, which is not limited in the present invention.

In addition, the terms "system" and "network" may be used interchangeably in this specification. A term "and/or" herein merely describes an association relationship between associated objects, indicating three types of relationships may exist, for example, A and/or B may represent three cases where only A exists, both A and B exist, and only B exists. In addition, the character "/" in the specification generally indicates an "or" relationship between the associated objects.

### Embodiment 1

This embodiment of the present invention provides a method for processing a message between a micro cell and a macro cell, which, as shown in FIG. 2, includes the following:
101. Abase station gateway allocates a transmission channel to a micro cell base station that is managed by the base station gateway, where the transmission channel is used to perform message transfer between the base station gateway and a corresponding macro cell node.

A method for allocating the transmission channel may be: allocating, by the base station gateway, a dedicated ID to the micro cell base station that is managed by the base station gateway, so as to transmit a message of the micro cell base station according to the dedicated ID, where the dedicated ID may be sent to the micro cell base station as a fixed dedicated ID of the micro cell base station, so that the micro cell base station subsequently uses the fixed dedicated ID to send a message of the same type; or the dedicated ID may also be used as a temporary ID of the micro cell base station, and is used, only when an ID is repeatedly used for the message of the micro cell base station, to temporarily replace the ID of the message to facilitate processing and reply by the macro cell node.

The method for allocating the transmission channel may also be: allocating, by the base station gateway, a micro cell number to the micro cell base station that is managed by the base station gateway, so that the micro cell base station adds the micro cell number to a message to be sent and transfer the message of the micro cell base station. In this case, although an ID is repeatedly used for the micro cell base station, the macro cell node may also distinguish, by using different micro cell numbers, messages sent from different micro cell base stations, so as to correctly process and reply to a message of each micro cell base station, where the micro cell number may be an identity of a random length, or may also be a micro cell identity, a micro cell base station identity, or the like.

The method for allocating the transmission channel may also be: establishing multiple dedicated connections between the base station gateway and the macro cell node, where each dedicated connection is in a one-to-one correspondence with each micro cell base station. In this case, a message of a corresponding micro cell base station is transferred by using a dedicated connection, and isolation of messages of different micro cell base stations may also be implemented. Although each micro cell base station uses a same ID, the macro cell node may also separately process and reply to a message in each dedicated connection.

The message of the micro cell base station includes a message of public measurement process and/or an information exchange process. The ID includes a measurement ID (Measurement ID), an information exchange ID (Information Exchange ID), and/or a transaction ID (Transaction ID), and the like.
102. Transfer a message of the micro cell base station through the transmission channel.

Transferring the message of the micro cell base station may include receiving, by the base station gateway, the message sent by the micro cell base station, and sending the received message to a macro cell node at a peer end; and may further include receiving, by the base station gateway, a reply message sent by the macro cell node at the peer end, and sending the reply message to the corresponding micro cell base station.

In the method for processing the message between the micro cell and the macro cell provided by this embodiment of the present invention, the transmission channel is allocated to each micro cell base station that is connected to the same base station gateway, and the transmission channel is used to transfer the message of the micro cell base station to the macro cell node. Compared with a technology, in the prior art, in which multiple micro cell base stations share a same transmission channel, the method may isolate messages of different micro cell base stations by dividing the transmission channel, and may prevent repeated use of a same ID by multiple base stations, which causes a failure of the macro cell node to correctly process a message, so that the message between the micro cell and macro cell can be correctly processed.

### Embodiment 2

This embodiment of the present invention provides a method for processing a message between a micro cell and a macro cell, which, as shown in FIG. 3, includes the following:
201. A base station gateway allocates an ID to a micro cell base station as a dedicated ID of the micro cell base station.

The dedicated ID is specifically an available range of dedicated IDs, and the base station gateway may allocate an available range of dedicated IDs to the micro cell base station, or specify one or more IDs and allocate them to corresponding micro cell base stations as dedicated IDs, where the available range of dedicated IDs may specifically be represented in any one of the following forms: a single ID, a set of at least two IDs, an available range of dedicated IDs indicated by a start dedicated ID and an end dedicated ID, or an available range of dedicated IDs indicated by a start dedicated ID and a quantity of dedicated IDs. It may be understood that one base station gateway may also incorporate multiple representation manners of the available range of dedicated IDs, and which representation manner to be specifically adopted may be determined according to a practical application scenario.
202. Transfer a message of the micro cell base station according to the dedicated ID.

A manner of transferring the message of the microcell base station according to the dedicated ID may serve as a transmission channel. Repeated use of an ID between different micro cell base stations is avoided by using the dedicated ID, and therefore messages of the micro cell base stations are isolated from each other to prevent a macro cell node at a peer end from considering and processing received messages as the same message because they have the same ID.

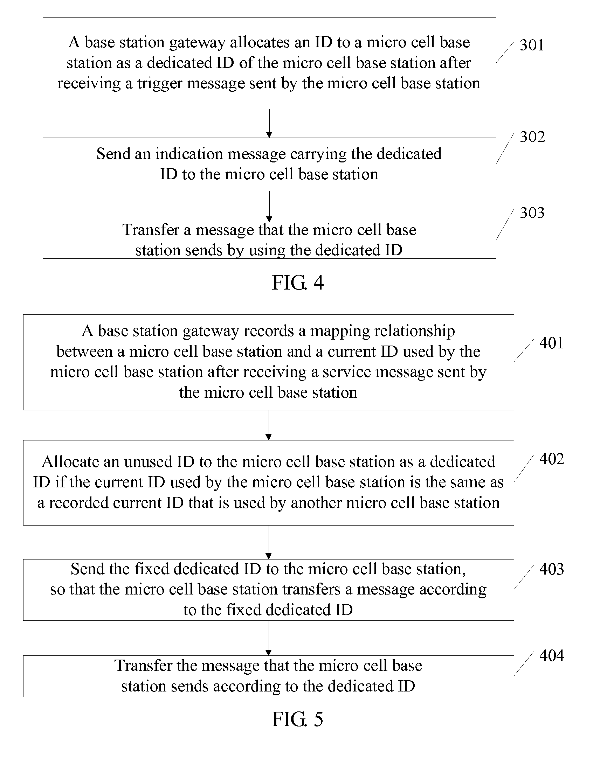

Further, as shown in FIG. 4, in another application scenario of Embodiment 2 of the present invention, the dedicated ID may be allocated, by the base station gateway, to the micro cell base station that is connected to the based station gateway. The following is a method for the base station gateway to complete allocation of the dedicated ID in a micro cell base station registration process, an interface setup process, or a configuration transmission process:
301. The base station gateway allocates the ID to the micro cell base station as the dedicated ID of the micro cell base station after receiving a trigger message sent by the micro cell base station.

The trigger message may be an interface setup request message, a registration request message, or a configuration transmission request message, or the like sent by the micro cell base station to the base station gateway, or, the trigger message may also be a first service message, an interface setup request message, or an ID allocation request message, or the like sent by the macro cell node. When the micro cell base station is powered on and connected to the base station gateway or a direct interface is established between the micro cell base station and the macro cell, processes such as registration, interface setup, and configuration transmission need to be performed between the micro cell base station and the base station gateway. Therefore, after receiving the interface setup request message, registration request message, or configuration transmission request message sent by the micro cell base station, the base station gateway may allocate the ID to the micro cell base station as the dedicated ID of the micro cell base station, or the base station gateway may allocate the ID to the micro cell as the dedicated ID of the micro cell base station when the base station gateway receives the interface setup request message, an ID configuration message, or a service message sent by the macro cell, and forwards the foregoing message to the micro cell base station, or when the interface setup process is triggered between the base station gateway and the micro cell.
302. Send an indication message carrying the dedicated ID to the micro cell base station.

Corresponding to the trigger message sent by the micro cell base station, the indication message is: an interface setup response message, a registration acceptance message, or a configuration transmission response message, or the like. Corresponding to the trigger message sent by the macro cell node, the indication message may also be: an interface setup request message, or the like. After the base station gateway allocates the dedicated ID to the micro cell base station, the base station gateway may use a corresponding interface setup response message, registration acceptance message, or configuration transmission response message to carry the allocated dedicated ID and send the message to the micro cell base station.
303. Transfer a message that the micro cell base station sends by using the dedicated ID.

As shown in FIG. 5, in another application scenario of this embodiment of the present invention, the base station gateway may also perform centralized processing for the ID of the micro cell base station in a service process, and allocate the dedicated ID only to the micro cell base station in which repeated use of an ID occurs. The following is a method for allocating the dedicated ID by the base station gateway to the micro cell base station, in which repeated use of an ID occurs, as a fixed dedicated ID of the micro cell base station.
401. The base station gateway records a mapping relationship between the micro cell base station and a current ID used by the micro cell base station after receiving a service message sent by the micro cell base station.

For example, as shown in Table 1, the current ID (which may be one or more) used by the micro cell base station and a corresponding micro cell identity are recorded in a mapping relationship table stored in the base station gateway. Each time when the service message sent by the micro cell base station is received, the ID carried in the message is compared with the ID recorded in the mapping relationship table. If there is no identical ID, the ID carried in the message and a corresponding micro cell base station identity are stored in the mapping relationship table.

**Table 1**

| **Measurement ID/Information exchange ID/Transaction ID** | **Micro cell base station identity** |
|---|---|
| ID 1 | Identity 1 |
| ID 2, ID 3... | Identity 2 |

402. Allocate an ID to the micro cell base station as the fixed dedicated ID if the current ID used by the micro cell base station is the same as a recorded current ID that is used by another micro cell base stations.

When the ID carried in the received message sent by the micro cell base station is the same as the ID recorded in the foregoing mapping relationship table, but is from a different micro cell base station, a situation of repeated use of the ID occurs. To prevent incorrect processing caused by a same ID being used by more than one micro cell base station to transfer a message, the base station gateway may reserve the previous ID that has already been recorded in the mapping relationship table, and allocate an unused ID to a subsequent micro cell base station as the dedicated ID to replace the current ID currently used by the micro cell base station and has already been used by another micro cell base stations. Likewise, the mapping relationship between the dedicated ID after replacement and the micro cell base station may also be recorded in the foregoing mapping relationship table to facilitate subsequent query. It is worth explaining that after the fixed dedicated ID allocated by the base station gateway is sent to the micro cell base station, the micro cell base station uses the fixed dedicated ID as an ID of a corresponding process, and may continue to use the fixed dedicated ID when sending a service message of a same object in a same process.
403. Send the fixed dedicated ID to the micro cell base station so that the micro cell base station uses the fixed dedicated ID to transfer the message.

If the dedicated ID is used as the fixed dedicated ID of the micro cell base station, the fixed dedicated ID may be sent to the micro cell base station, therefore, next time when the micro cell base station sends, for the same object, a service message of the same type, the micro cell base station may use the fixed dedicated ID; therefore a conflict does not occur between the fixed dedicated ID and the ID of another micro cell base station.
404. Transfer the message that the micro cell base station sends by using the dedicated ID.

After receiving the message carrying the fixed ID sent by the micro cell base station, the base station gateway sends the message to the macro cell node. Therefore, the macro cell node may process and reply to the message according to the ID carried in the message. After receiving a reply message carrying the fixed dedicated ID, the base station gateway sends the reply message to the corresponding micro cell base station.

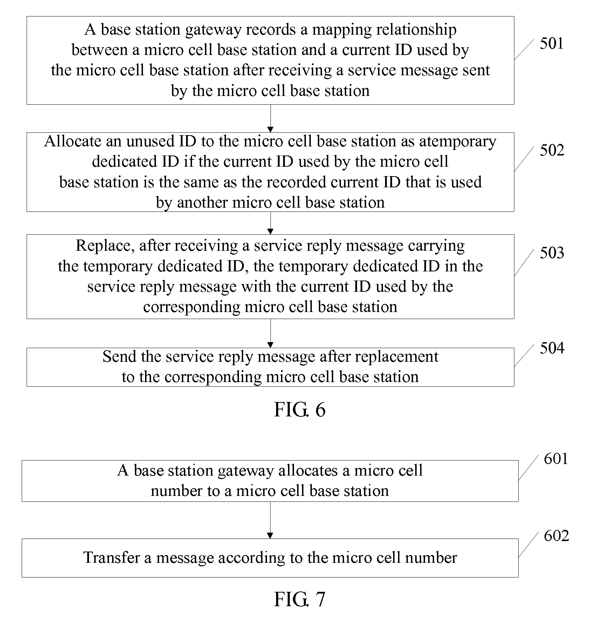

Further, as shown in FIG. 6, in another application scenario of this embodiment of the present invention, the base station gateway may also allocate the dedicated ID to the micro cell base station, in which repeated use of an ID occurs, as a temporary ID of the micro cell base station in the service process, and a detailed method is as follows:
501. The base station gateway records a mapping relationship between the micro cell base station and a current ID used by the micro cell base station after receiving a service message sent by the micro cell base station.
502. Allocate an unused ID to the micro cell base station as the temporary dedicated ID if the current ID used by the micro cell base station is the same as the recorded current ID that is used by another micro cell base station.

For example, a mapping relationship table stored in the base station gateway may be shown in FIG. 2, and a current ID used by each micro cell base station, a corresponding micro cell base station identity, and a temporary dedicated ID after replacement are recorded in the table.

**Table 2**

| **Measurement ID/Information exchange ID/Transaction ID** | **Micro cell base station identity** | **Temporary dedicated ID** |
|---|---|---|
| ID 1 | Identity 1 | |
| ID 2 | Identity 2 | |
| ID 1 | Identity 3 | ID 3 |

If the ID carried in the service message of the micro cell base station received by the base station gateway is the same as the ID recorded in the mapping relationship table, but is from a different micro cell base station, an unused ID may be allocated to a subsequent micro cell base station as the temporary dedicated ID and the temporary dedicated ID is recorded in the mapping relationship table. For example, an ID from micro cell base station 3 in FIG. 2 is the same as an ID from micro cell base station 1, that is, a situation of repeated use of the ID occurs. The temporary dedicated ID is recorded in the mapping relationship table and the current ID (ID 1) is replaced by the temporary dedicated ID (ID 3). It is worth explaining that a bi-directional replacement with the temporary dedicated ID allocated by the base station gateway is performed only on the base station gateway and the temporary dedicated ID does not need to be sent to the micro cell base station; therefore, the micro cell base station still uses the current ID when sending the service message of a same object in a same process.
503. Replace, after receiving a service reply message carrying the temporary dedicated ID, the temporary dedicated ID in the service reply message with the current ID used by the corresponding micro cell base station.

Using table 2 as an example again, after receiving the service message of the micro cell base station forwarded by the base station gateway, the macro cell node at the peer end may perform processing and reply according to the temporary dedicated ID carried in the service message, and send the service reply message carrying the temporary dedicated ID to the base station gateway. After receiving the service reply message, the base station gateway replaces again the temporary dedicated ID (ID 3) carried in the service reply message with the current ID (ID 1) used by the corresponding micro cell base station. It is understood that the base station gateway performs temporary ID replacement for the message with a repeatedly used ID, after completing service message processing, the base station gateway may delete the temporary dedicated ID recorded in the mapping relationship table so that more unused IDs are provided for use.
504. Send the service reply message after replacement to the corresponding micro cell base station.

The micro cell base stations may continue to use the same ID by themselves, and the base station gateway uniformly performs temporary replacement processing for the ID that is repeatedly used.

Further, the base station gateway records a service of a related macro cell (including related measurement or exchange information that has been initiated by a certain micro cell and performed by the same macro cell). After receiving a message initiated by the certain micro cell, the base station gateway finds that information that the micro cell needs to query has already been obtained from the same macro cell by another micro cell, and after recording the information, the base station gateway may construct a corresponding service reply message according to stored information and directly send the reply to the micro cell base station.

It should be noted that for detailed description of some steps of this embodiment of the present invention, refer to corresponding content in Embodiment 1, and details are not further described herein.

In the method for processing the message between the micro cell and the macro cell provided by this embodiment of the present invention, the dedicated ID is allocated to each micro cell base station that is connected to the same base station gateway, and the dedicated ID is used to transfer the message of the micro cell base station to the macro cell node. Compared with a technology, in the prior art, in which multiple micro cell base stations share the same ID, the method may isolate messages of different micro cell base stations by allocating the dedicated ID, and may prevent the repeated use of the same ID by multiple base stations, which causes a failure of the macro cell node to correctly process a message, so that the message between the micro cell and macro cell can be correctly processed.

### Embodiment 3

This embodiment of the present invention provides a method for processing a message between a micro cell and a macro cell, which, as shown in FIG. 7, includes the following:
601. A base station gateway allocates a micro cell number to a micro cell base station.

The micro cell number may be any one of the following: a micro cell identity, a micro cell base station identity, or the micro cell number the micro cell gateway allocates to the micro cell base station.
602. The base station gateway transfer a message according to the micro cell number.

The message sent by the micro cell base station carries an ID, where the ID may be the same as an ID of another micro cell base station. To distinguish each micro cell base station, the base station gateway may send the micro cell number to the micro cell base station and the micro cell base station adds the micro cell number to the message to be sent, or the base station gateway adds the micro cell number to the message sent by the micro cell base station and then sends the message to a macro cell node at a peer end. Therefore, after the macro cell node receives a message that carries both the ID and the micro cell number, although multiple messages carry the same ID, the micro cell numbers carried by the messages are different, and the messages are not considered as the same message. The macro cell node may separately perform processing and reply for the message of the micro cell base station according to the micro cell number.

It is understood that the micro cell number is in a one-to-one correspondence with the micro cell base station, and transferring the message according to the micro cell number may distinguish messages between different micro cell base stations; therefore the transferring the message according to the microcell number is also.

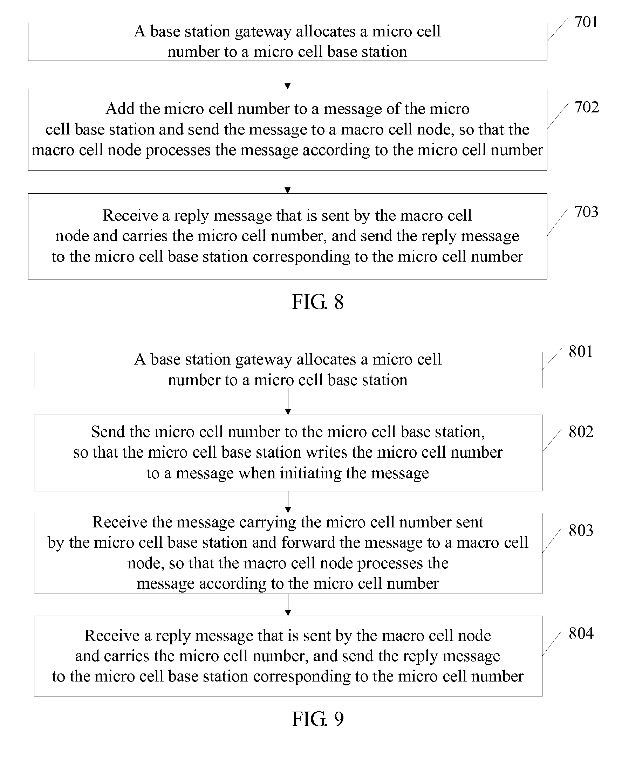

Further, as shown in FIG. 8, in an implementation scenario of this embodiment of the present invention, the micro cell number may be added to the message of the corresponding micro cell base station by the base station gateway, and a specific method is as follows:
701. The base station gateway allocates the micro cell number to the micro cell base station.
702. Add the micro cell number to the message of the micro cell base station and send the message to the macro cell node, so that the macro cell node processes the message according to the micro cell number.

After the macro cell node receives the message that carries both the ID and the micro cell number, although multiple messages carry the same ID and different micro cell numbers, they are not be considered as the same message. The macro cell node may separately perform processing and reply for the message of the micro cell base station according to the micro cell number.
703. Receive a reply message that is sent by the macro cell node and carries the micro cell number, and send the reply message to the micro cell base station corresponding to the micro cell number.

As shown in FIG. 9, in another implementation scenario of this embodiment of the present invention, the micro cell number may also be allocated by the base station gateway and the micro cell base station adds the micro cell number to the message to be sent. A specific method is as follows:
801. The base station gateway allocates the micro cell number to the micro cell base station.
802. Send the micro cell number to the micro cell base station, so that the micro cell base station adds the micro cell number to the message when initiating the message.
803. Receive the message that is sent by the micro cell base station and carries the micro cell number, and forward the message to the corresponding macro cell node, so that the macro cell node processes the message according to the micro cell number.
804. Receive a reply message that is sent by the macro cell node and carries the micro cell number, and send the reply message to the micro cell base station corresponding to the micro cell number.

It should be noted that for detailed description of some steps of the embodiment of the present invention, refer to corresponding content in Embodiment 1 and Embodiment 2, and details are not further described herein.

In the method for processing the message between the micro cell and the macro cell provided by this embodiment of the present invention, the micro cell number is allocated to each micro cell base station that is connected to the same base station gateway, and the transmission channel is used to transfer the message of the micro cell base station to the macro cell node. Compared with a technology, in the prior art, in which multiple micro cell base stations share a same transmission channel, the method may isolate messages of different micro cell base stations by dividing the transmission channel, and may prevent repeated use of the same ID by multiple base stations, which causes a failure of the macro cell node to correctly process a message, so that the message between the micro cell and macro cell can be correctly processed.

### Embodiment 4

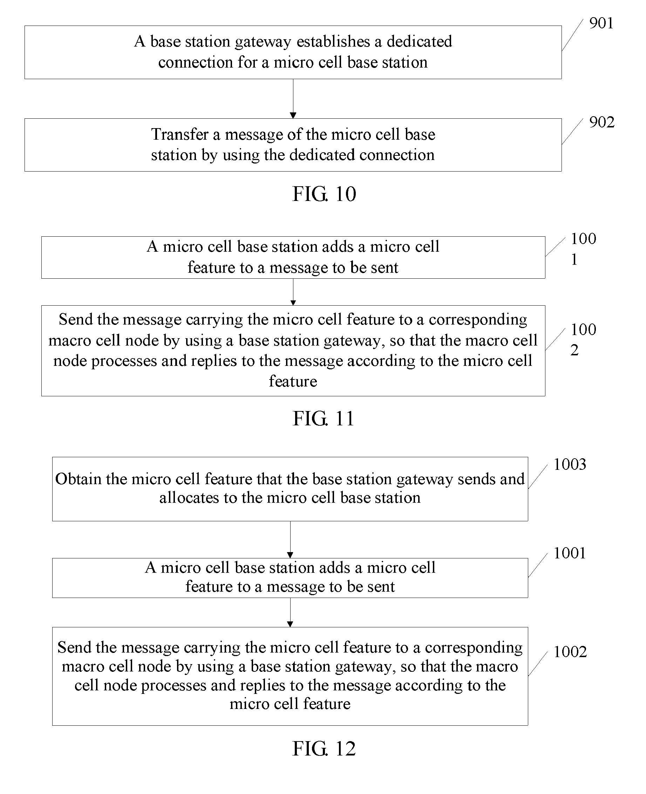

This embodiment of the present invention provides a method for processing a message between a micro cell and a macro cell, which, as shown in FIG. 10, includes the following:
901. Abase station gateway establishes a dedicated connection for a micro cell base station.

Conventionally, as shown in FIG. 1, only one shared connection is established between the base station gateway and a macro cell node for a public measurement or information exchange process. Related service messages of multiple micro cell base stations connected to the base station gateway are all transferred to the macro cell node by using the same shared connection.

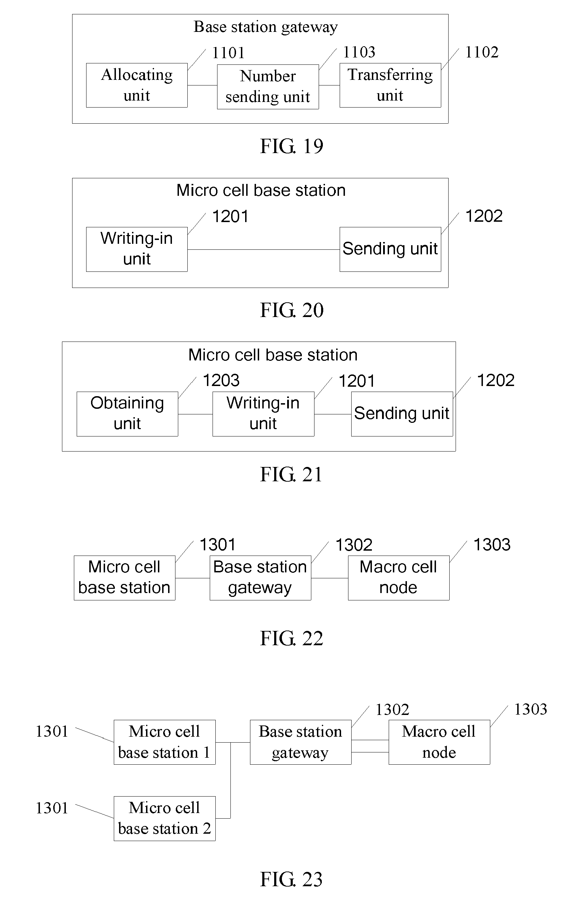

In this embodiment of the present invention, to prevent a failure of the macro cell node to correctly process service messages of micro cell base stations due to an ID conflict of the micro cell base stations of a same base station gateway, a dedicated connection is established for each of the micro cell base stations, as shown in FIG. 23. Therefore, the message of the micro cell base stations may all be transferred in their respective corresponding dedicated connections, and the macro cell node may also separately process the service message in each dedicated connection; therefore that the messages cannot be correctly processed does not occur due to the ID conflict.
902. Transfer a message of the micro cell base station by using the dedicated connection.

It should be noted that for detailed description of some steps of this embodiment of the present invention, refer to corresponding content in Embodiments 1 to 3, and details are not further described herein.

In the method for processing the message between the micro cell and the macro cell provided by this embodiment of the present invention, the transmission channel is allocated to each micro cell base station that is connected to the same base station gateway, and the transmission channel is used to transfer the message of the micro cell base station to the macro cell node. Compared with a technology, in the prior art, in that multiple micro cell base stations share a same transmission channel, the method may isolate messages of different micro cell base stations by dividing the transmission channel, and may prevent repeated use of a same ID by multiple base stations, which causes a failure of the macro cell node to correctly process a message, so that the message between the micro cell and macro cell can be correctly processed.

### Embodiment 5

This embodiment of the present invention provides a method for processing a message between a micro cell and a macro cell, and the method is applied on a micro cell base station side, which, as shown in FIG. 11, includes the following:
1001. A micro cell base station adds a micro cell feature to a message to be sent.

The micro cell feature includes any one of the following: a micro cell identity, a micro cell number, a micro cell base station identity, a dedicated ID or a micro cell number that a base station gateway allocates to the micro cell base station, or a dedicated ID or a micro cell number that a base station management system HMS allocates to the micro cell base station.

It is understood that the micro cell base station may use a configured micro cell identity as the micro cell feature and add the configured micro cell identity to the message to be sent, and may not need to obtain the micro cell feature from the base station gateway or the base station management system (such as an HMS). Besides, the micro cell base station may also obtain the micro cell feature from the base station gateway or the base station management system HMS.
1002. Send the message carrying the micro cell feature to a corresponding macro cell node by using a base station gateway, so that the macro cell node processes and replies to the message according to the micro cell feature.

To distinguish from a message of another micro cell base station, the micro cell base station may add the micro cell feature to the message of the micro cell base station and then send the message to a macro cell node at a peer end. For example, the micro cell base station adds the micro cell identity to the message to be sent as the micro cell feature, and after the macro cell node receives the message carrying both an ID and the micro cell feature, although multiple messages carry the same ID and different micro cell features, they are not be considered as the same message. The macro cell node may separately perform processing and reply for the message of the micro cell base station according to the micro cell feature. Alternatively, for example, the micro cell base station selects one dedicated ID allocated by the base station gateway or the base station management system and adds the dedicated ID to the message to be sent, therefore, it is ensured that IDs sent by several micro cell base stations are not repeatedly used in a same process to prevent confused message processing by the macro cell node that occurs due to the same ID.

Further, as shown in FIG. 12, in an application scenario of this embodiment of the present invention, the method further includes the following:
1003. Obtain the micro cell feature that the base station gateway sends and allocates to the micro cell base station.

The micro cell base station may obtain the micro cell identity, the dedicated ID, the micro cell number, and the like from the base station gateway, which are considered as the micro cell feature and added to the message to be sent.

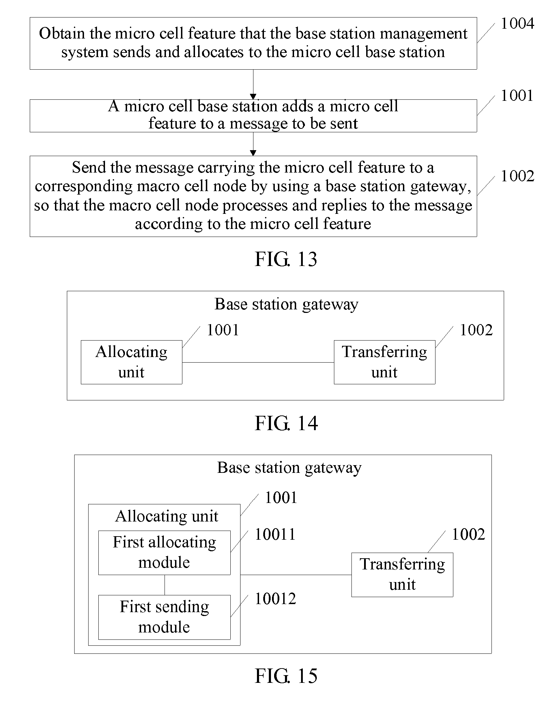

Optionally, as shown in FIG. 13, in another application scenario of this embodiment of the present invention, the method further includes the following:
1004. Obtain the micro cell feature that the base station management system HMS sends and allocates to the micro cell base station.

The micro cell base station may obtain the micro cell identity, the dedicated, the micro cell number, and the like from the base station management system HMS, which are considered as the micro cell feature and added to the message to be sent.

It should be noted that for detailed description of some steps of this embodiment of the present invention, refer to corresponding content in Embodiments 1 to 4, and details are not further described herein.

In the method for processing the message between the micro cell and the macro cell provided by this embodiments of the present invention, the micro cell base station adds the corresponding micro cell feature to the message to be sent, so as to distinguish the message from a message of another micro cell base station. Compared with a technology, in the prior art, in which the message sent by the micro cell base station carries only the ID the micro cell base station selects by itself, the method may isolate messages of different micro cell base stations by using the micro cell feature carried in the messages, and may prevent the repeated use of the same ID by multiple base stations, which causes a failure of the macro cell node to correctly process a message, so that the message between the micro cell and macro cell can be correctly processed.

### Embodiment 6

The embodiment of the present invention provides a base station gateway, which, as shown in FIG. 14, includes an allocating unit 1101 and a transferring unit 1102.

The allocating unit 1101 is configured to allocate a transmission channel to a micro cell base station that is managed by the base station gateway, where the transmission channel is used to perform message transfer between the base station gateway and a corresponding macro cell node.

The transferring unit 1102 is configured to transfer a message of the micro cell base station through the transmission channel.

Further optionally, in an application scenario of this embodiment of the present invention, the allocating unit 1101 is specifically configured to allocate an unused ID to the micro cell base station as a dedicated ID of the micro cell base station.

Correspondingly, the transferring unit 1102 is specifically configured to transfer the message of the micro cell base station according to the dedicated ID.

The dedicated ID is specifically an available range of dedicated IDs, where the available range of dedicated IDs is specifically indicated as a single ID, and/or a set of at least two IDs, and/or an available range of dedicated IDs indicated by a start dedicated ID and an end dedicated ID, and/or an available range of dedicated IDs indicated by a start ID and a quantity of dedicated IDs.

Further optionally, as shown in FIG. 15, the allocating unit 1101 may include: a first allocating module 11011 and a first sending module 11012.

The first allocating module 11011 is configured to allocate the unused ID to the micro cell base station as the dedicated ID of the micro cell base station after receiving a trigger message.

The first sending module 11012 is configured to send an indication message carrying the dedicated ID to the micro cell base station.

The trigger message may be an interface setup request message, a registration request message, or a configuration transmission request message sent by the micro cell base station. Correspondingly, the indication message is an interface setup response message, a registration acceptance message, or a configuration transmission response message.

Alternatively, the trigger message may be a first service message, an interface setup request message, or an ID allocation request message sent by the macro cell node. Correspondingly, the indication message is an interface setup request message.

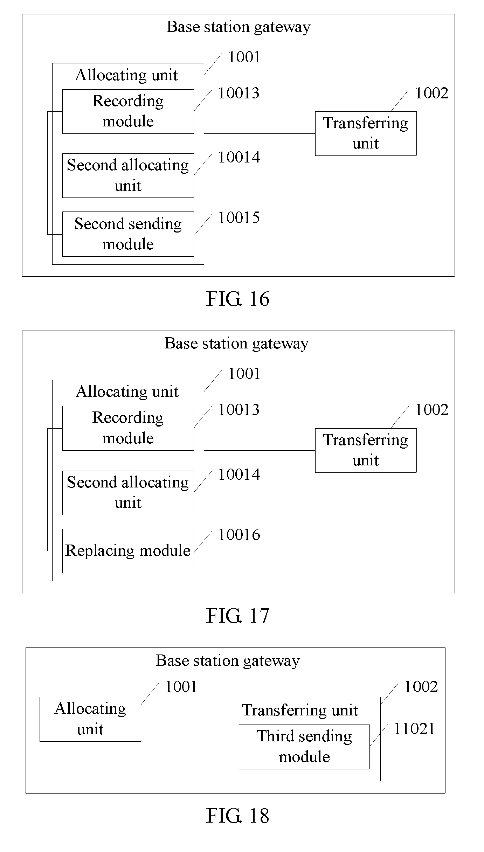

Optionally, as shown in FIG. 16, the allocating unit 1101 may include: a recording module 11013 and a second allocating module 11014.

The recording module 11013 is configured to record a mapping relationship between the micro cell base station and a current ID used by the micro cell base station after the base station gateway receives a service message sent by the micro cell base station.

The second allocating module 11014 is configured to allocate an unused ID to the micro cell base station as a temporary dedicated ID when the current ID used by the micro cell base station is the same as a recorded current ID that is used by another micro cell base station.

In an application scenario, the dedicated ID is allocated as a fixed dedicated ID of the micro cell base station, and the allocating unit 1101 may further include a second sending module 11015.

The second sending module 11015 is configured to send the fixed dedicated ID to the micro cell base station, so that the micro cell base station uses the fixed dedicated ID to transfer the message.

As shown in FIG. 17, in another application scenario, the dedicated ID is allocated as a temporary dedicated ID of the micro cell base station, and the allocating unit 1101 may further include a replacing module 11016.

The replacing module 11016 is configured to replace, after receiving a service reply message carrying the temporary dedicated ID, the temporary dedicated ID in the service reply message with the current ID used by the corresponding micro cell base station.

Alternatively, in another application scenario of this embodiment of the present invention, the allocating unit 1101 is specifically configured to allocate, by the base station gateway, a micro cell number to the micro cell base station.

Correspondingly, the transferring unit 1102 is specifically configured to transfer the message according to the micro cell number.

The micro cell number may be any one of the following: a micro cell identity, a micro cell base station identity, a micro cell number that a micro cell gateway allocates to the micro cell base station, or a micro cell number that a base station management system allocates to the micro cell base station.

Further, the base station gateway may add a corresponding micro cell number to the message of the micro cell base station. As shown in FIG. 18, the transferring unit 1102 includes a third sending module 11021.

The third sending module 11021 is configured to add the micro cell number to the message of the micro cell base station, and send the message to the macro cell node, so that the macro cell node processes the message according to the micro cell number. The third sending module 11021 is further configured to receive a reply message that is sent by the macro cell node and carries the micro cell number, and send the reply message to the micro cell base station corresponding to the micro cell number.

As shown in FIG. 19, in an application scenario, the base station gateway may also allocate the micro cell number and send the micro cell number to the micro cell base station, and then the micro cell base station adds the corresponding micro cell number to a message to be sent. The base station gateway may further include a number sending unit 1103.

The number sending unit 1103 is configured to send the micro cell number to the micro cell base station after the allocating unit 1101 allocates the micro cell number to the micro cell base station, so that the micro cell base station adds the micro cell number to a message when initiating the message.

The transferring unit 1102 is further configured to receive a message that is sent by the micro cell base station and carries the micro cell number, and forward the message to a corresponding macro cell node, so that the macro cell node processes the message according to the micro cell number; and receive a reply message that is sent by the macro cell node and carries the micro cell number, and send the reply message to the micro cell base station corresponding to the micro cell number.

Alternatively, in another application scenario of this embodiment of the present invention, the allocating unit 1101 is specifically configured to establish a dedicated connection for the micro cell base station.

Correspondingly, the transferring unit 1102 is specifically configured to transfer the message of the micro cell base station by using the dedicated connection.

This embodiment of the present invention further provides a micro cell base station. As shown in FIG. 20, the micro cell base station may include a writing-in unit 1201 and a sending unit 1202.

The writing-in unit 1201 is configured to add a micro cell feature to a message to be sent;

The sending unit 1202 is configured to send a message carrying the micro cell feature to a corresponding macro cell node by using a base station gateway, so that the macro cell node processes and replies to the message according to the micro cell feature.

The micro cell feature includes any one of the following: a micro cell identity, a micro cell number, a micro cell base station identity, a dedicated ID or a micro cell number that the base station gateway allocates to the micro cell base station, or a dedicated ID or a micro cell number that a base station management system HMS allocates to the micro cell base station.

Further, as shown in FIG. 21, the micro cell base station may further include an obtaining unit 1203.

The obtaining unit 1203 is configured to, before the writing-in unit 1201 adds a micro cell feature to a message to be sent, obtain the micro cell feature that the base station gateway sends and allocates to the micro cell base station; or obtain the micro cell feature that the base station management system sends and allocates to the micro cell base station.

This embodiment of the present invention further provides a system for processing a message between a micro cell and a macro cell, which, as shown in FIG. 22, includes a base station gateway 1302, a micro cell base station 1301 connected to the base station gateway 1302, and a macro cell node 1303 connected to the base station gateway 1302.

The base station gateway 1302 is configured to allocate a transmission channel to the micro cell base station 1301 that is connected to the base station gateway 1302, where the transmission channel is used to perform message transfer between the base station gateway 1302 and the corresponding macro cell node 1303; and transfer the message of the micro cell base station 1301 through the transmission channel.

Further, as shown in FIG. 23, a method for the base station gateway 1302 to allocate the transmission channel to the micro cell base station 1301 is: establishing a dedicated connection for the micro cell base station 1301. Conventionally, only one shared connection is established between the base station gateway 1302 and a macro cell node 1303, and service messages of multiple micro cell base stations 1301 connected to the base station gateway 1302 are all transferred to the macro cell node 1303 through the shared connection.

To prevent a failure of the macro cell node 1303 to correctly process service messages of micro cell base stations 1301 due to an ID conflict of the micro cell base stations 1301 of a same base station gateway 1302, a dedicated connection is established for each of the micro cell base stations 1301 in FIG. 23. Therefore, the messages of the micro cell base stations 1301 may all perform transmission in their respective corresponding dedicated connections, and the macro cell node 1303 may also separately process the service message in each dedicated connection; therefore that the messages cannot be correctly processed does not occur due to the ID conflict.

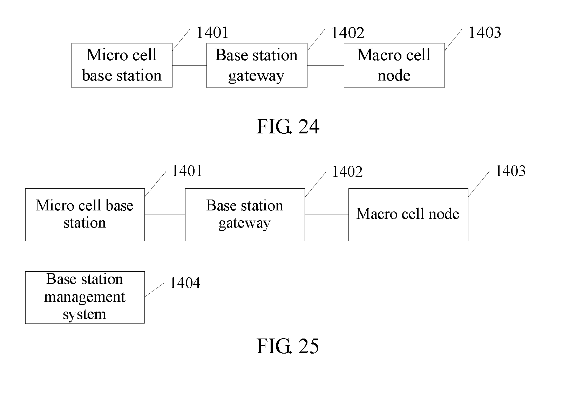

This embodiment of the present invention further provides another system for processing a message between a micro cell and a macro cell, which, as shown in FIG. 24, includes a micro cell base station 1401, a base station gateway 1402 connected to the micro cell base station 1401, and a macro cell node 1403 connected to the base station gateway 1402.

The micro cell base station 1401 is configured to add a micro cell feature to a message to be sent, and send the message carrying the micro cell feature to a corresponding macro cell node 1403 by using the base station gateway 1402, so that the macro cell node 1403 processes and replies to the message according to the micro cell feature.

The micro cell feature includes any one of the following: a micro cell identity, a micro cell number, a micro cell base station identity, a dedicated ID or a micro cell number that the base station gateway allocates to the micro cell base station, or a dedicated ID or a micro cell number that a base station management system HMS allocates to the micro cell base station.

Further, the micro cell feature may be allocated by the base station gateway 1402 and sent to the micro cell base station 1401.

Alternatively, as shown in FIG. 25, in another application scenario of this embodiment of the present invention, the system for processing the message between the micro cell and the macro cell may further include a base station management system HMS 1404.

The micro cell feature may be allocated by the base station management system HMS 1404 and sent to the micro cell base station 1401.

It should be noted that for detailed description of some function modules of this embodiment of the present invention, refer to corresponding content in Embodiments 1 to 5, and details are not further described herein.

In the system for processing the message between the micro cell and the macro cell, the micro cell base station, and the base station gateway provided by this embodiment of the present invention, the transmission channel is allocated to each micro cell base station that is connected to the same base station gateway, and the transmission channel is used to transfer the message of the micro cell base station to the macro cell node. Compared with a technology, in the prior art, in which multiple micro cell base stations share the same transmission channel, the system for processing the message between the micro cell and the macro cell, the micro cell base station, and the base station gateway may isolate messages of different micro cell base stations by allocating the transmission channel, and may prevent repeated use of a same ID by multiple base stations, which causes a failure of the macro cell node to correctly process a message, so that the message between the micro cell and macro cell can be correctly processed.

It may be clearly understood by a person skilled in the art that, for the purpose of convenient and brief description, illustrations are made only by dividing each of the foregoing function module, and in a practical application, the foregoing functions may be assigned, as required, to different function modules for completion, that is, internal structure of an apparatus is divided into different function modules so as to complete all or part of the foregoing described functions. A detailed working process of the foregoing described system, apparatus, and unit may refer to a corresponding process of the foregoing method embodiments, which is not further described herein.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A method for processing a message between a micro cell and a macro cell, comprising:
allocating, by a base station gateway, a transmission channel to a micro cell base station that is managed by the base station gateway, wherein the transmission channel is used to perform message transfer between the micro cell base station and a corresponding macro cell node; and
transferring a message of the micro cell base station through the transmission channel.

2. The method according to claim 1, wherein the allocating, by the base station gateway, the transmission channel to the micro cell base station that is managed by the base station gateway specifically comprises:
allocating, by the base station gateway, an ID to the micro cell base station as a dedicated ID of the micro cell base station; and
correspondingly, the transferring the message of the micro cell base station through the transmission channel specifically comprises: transferring the message of the micro cell base station according to the dedicated ID.

3. The method according to claim 2, wherein the allocating, by the base station gateway, the ID to the micro cell base station as the dedicated ID of the micro cell base station comprises:
allocating, by the base station gateway after receiving a trigger message, the ID to the micro cell base station as the dedicated ID of the micro cell base station; wherein
the method further comprises:
sending, by the base station gateway, an indication message carrying the dedicated ID to the micro cell base station.

4. The method according to claim 3, wherein:
the trigger message is an interface setup request message, a registration request message, or a configuration transmission request message sent by the micro cell base station; and
correspondingly, the indication message is an interface setup response message, a registration acceptance message, or a configuration transmission response message.

5. The method according to claim 3, wherein:
the trigger message is a first service message, an interface setup request message, or an ID allocation request message sent by the macro cell node; and
correspondingly, the indication message is an interface setup request message.

6. The method according to claim 2, wherein the allocating, by the base station gateway, the ID to the micro cell base station as the dedicated ID of the micro cell base station comprises:
recording, by the base station gateway after receiving a service message sent by the micro cell base station, a mapping relationship between the micro cell base station and a current ID used by the micro cell base station; and
allocating an unused ID to the micro cell base station as the dedicated ID if the current ID used by the micro cell base station is the same as a recorded current ID that is used by another micro cell base station.

7. The method according to claim 6, wherein the dedicated ID corresponds to a fixed dedicated ID, and after the allocating, by the base station gateway, after the allocating the unused ID to the micro cell base station as the dedicated ID, the method further comprises:
sending the fixed dedicated ID to the micro cell base station, so that the micro cell base station uses the fixed dedicated ID to transfer the message.

8. The method according to claim 6, wherein the dedicated ID corresponds to a temporary dedicated ID, and after the allocating, by the base station gateway, after the allocating the unused ID to the micro cell base station as the dedicated ID, the method further comprises:
replacing, after receiving a service reply message carrying the temporary dedicated ID, the temporary dedicated ID in the service reply message with the current ID used by the corresponding micro cell base station.

9. The method according to any one of claims 2 to 8, wherein the dedicated ID is specifically an available range of dedicated IDs, wherein the available range of dedicated IDs is specifically indicated as a single ID, and/or a set of at least two IDs, and/or an available range of dedicated IDs indicated by a start dedicated ID and an end dedicated ID, and/or an available range of dedicated IDs indicated by a start ID and a quantity of dedicated IDs.

10. The method according to claim 1, wherein the allocating, by a base station gateway, the transmission channel to the micro cell base station that is managed by the base station gateway specifically comprises:
allocating, by the base station gateway, a micro cell number to the micro cell base station; and
correspondingly, the transferring the message of the micro cell base station through the transmission channel specifically comprises: transferring the message according to the micro cell number.

11. The method according to claim 10, wherein the transferring the message according to the micro cell number comprises:
adding the micro cell number to the message of the micro cell base station and sending the message to the macro cell node, so that the macro cell node processes the message according to the micro cell number; and
receiving a reply message that is sent the macro cell node and carries the micro cell number, and sending the reply message to the micro cell base station corresponding to the micro cell number.

12. The method according to claim 10 or claim 11, wherein after the allocating, by the base station gateway, the micro cell number to the micro cell base station, the method further comprises:
sending the micro cell number to the micro cell base station, so that the micro cell base station adds the micro cell number to a message when initiating the message; wherein
the transferring the message according to the micro cell number comprises:
receiving a message that is sent by the micro cell base station and carries the micro cell number, and forwarding the message to a corresponding macro cell node, so that the macro cell node processes the message according to the micro cell number; and
receiving a reply message that is sent by the macro cell node and carries the micro cell number, and sending the reply message to the micro cell base station corresponding to the micro cell number.

13. The method according to any one of claims 10 to 12, wherein the micro cell number is any one of the following: a micro cell identity, a micro cell base station identity, or a micro cell number allocated by the micro cell gateway to the micro cell base station.

14. The method according to claim 1, wherein the allocating, by the base station gateway, the transmission channel to the micro cell base station that is managed by the base station gateway specifically comprises:
establishing, by the base station gateway, a dedicated connection for the micro cell base station; and
correspondingly, the transferring the message of the micro cell base station through the transmission channel specifically comprises: transferring the message of the micro cell base station by using the dedicated connection.

15. The method according to claim 1, wherein the message of the micro cell base station comprises: a message of a public measurement process and/or an information exchange process.

16. The method according to claim 2, wherein the ID comprises: a measurement ID, an information exchange ID, and/or a transaction ID.

17. A method for processing a message between a micro cell and a macro cell, which is applied on a micro cell base station side, comprising:
adding, by a micro cell base station, a micro cell feature to a message to be sent; and
sending the message carrying the micro cell feature to a corresponding macro cell node by using a base station gateway, so that the macro cell node processes and replies to the message according to the micro cell feature.

18. The method according to claim 17, wherein the micro cell feature comprises any one of the following: a micro cell identity, a micro cell number, a micro cell base station identity, a dedicated ID or a micro cell number that the base station gateway allocates to the micro cell base station, or a dedicated ID or a micro cell number that a base station management system allocates to the micro cell base station.

19. The method according to claim 17 or 18, wherein before the adding, by the micro cell base station, the micro cell feature to the message to be sent, the method further comprises:
obtaining the micro cell feature that the base station gateway sends and allocates to the micro cell base station.

20. The method according to claim 17 or 18, wherein before the adding, by the micro cell base station, the micro cell feature to the message to be sent, the method further comprises:
obtaining the micro cell feature that the base station management system sends and allocates to the micro cell base station; and
sending the micro cell feature to the base station gateway, so that the base station gateway transfers a message of the micro cell base station according to the micro cell feature.

21. Abase station gateway, comprising:
an allocating unit, configured to allocate a transmission channel to a micro cell base station that is managed by the base station gateway, wherein the transmission channel is used to perform message transfer between the micro cell base station and a corresponding macro cell node; and
a transferring unit, configured to transfer a message of the micro cell base station through the transmission channel.

22. The base station gateway according to claim 21, wherein:
the allocating unit is specifically configured to allocate an ID to the micro cell base station as a dedicated ID of the micro cell base station; and
correspondingly, the transferring unit is specifically configured to transfer the message of the micro cell base station according to the dedicated ID.

23. The base station gateway according to claim 22, wherein the allocating unit comprises:
a first allocating module, configured to allocate the ID to the micro cell base station as the dedicated ID of the micro cell base station after receiving a trigger message sent by the micro cell base station; and
a first sending module, configured to send an indication message carrying the dedicated ID to the micro cell base station.

24. The base station gateway according to claim 23, wherein:
the trigger message is an interface setup request message, a registration request message, or a configuration transmission request message sent by the micro cell base station; and
correspondingly, the indication message is an interface setup response message, a registration acceptance message, or a configuration transmission response message.

25. The base station gateway according to claim 23, wherein:
the trigger message is a first service message, an interface setup request message, or an ID allocation request message sent by the macro cell node; and
correspondingly, the indication message is an interface setup request message.

26. The base station gateway according to claim 23, wherein the allocating unit comprises:
a recording module, configured to record a mapping relationship between the micro cell base station and a current ID used by the micro cell base station after the base station gateway receives a service message sent by the micro cell base station; and
a second allocating module, configured to allocate an unused ID to the micro cell base station as a temporary dedicated ID when the current ID used by the micro cell base station is the same as a recorded current ID that is used by another micro cell base station.

27. The base station gateway according to claim 26, wherein the dedicated ID corresponds to a fixed dedicated ID, and the allocating unit further comprises:
a second sending module, configured to send the fixed dedicated ID to the micro cell base station, so that the micro cell base station uses the fixed dedicated ID to transfer the message.

28. The base station gateway according to claim 26, wherein the dedicated ID corresponds to a temporary dedicated ID, and the allocating unit further comprises:
a replacing module, configured to replace, after receiving a service reply message carrying the temporary dedicated ID, the temporary dedicated ID in the service reply message with the current ID used by the corresponding micro cell base station.

29. The base station gateway according to any one of claims 22 to 28, wherein the dedicated ID is specifically an available range of dedicated IDs, wherein the available range of dedicated IDs is specifically indicated as a single ID, and/or a set of at least two IDs, and/or an available range of dedicated IDs indicated by a start dedicated ID and an end dedicated ID, and/or an available range of dedicated IDs indicated by a start ID and a quantity of dedicated IDs.

30. The base station gateway according to claim 21, wherein:
the allocating unit is specifically configured to allocate, by the base station gateway, a micro cell number to the micro cell base station; and
correspondingly, the transferring unit is specifically configured to transfer the message according to the micro cell number.

31. The base station gateway according to claim 30, wherein the transferring unit comprises:
a third sending module, configured to add the micro cell number to the message of the micro cell base station, and send the message to the macro cell node, so that the macro cell node processes the message according to the micro cell number; wherein
the third sending module is further configured to receive a reply message that is sent by the macro cell node and carries the micro cell number, and send the reply message to the micro cell base station corresponding to the micro cell number.

32. The base station gateway according to claim 30, further comprising:
a number sending unit, configured to send the micro cell number to the micro cell base station after the allocating unit allocates the micro cell number to the micro cell base station, so that the micro cell base station adds the micro cell number to a message when initiating the message; wherein
the transferring unit is further configured to receive a message that is sent by the micro cell base station and carries the micro cell number, and forward the message to a corresponding macro cell node, so that the macro cell node processes the message according to the micro cell number; and receive a reply message that is sent by the macro cell node and carries the micro cell number, and send the reply message to the micro cell base station corresponding to the micro cell number.

33. The base station gateway according to claim 21, wherein the micro cell number is any one of the following: a micro cell identity, a micro cell base station identity, or a micro cell number allocated by the micro cell gateway to the micro cell base station.

34. The base station gateway according to claim 21, wherein:
the allocating unit is specifically configured to establish a dedicated connection for the micro cell base station; and
correspondingly, the transferring unit is specifically configured to transfer the message of the micro cell base station by using the dedicated connection.

35. The base station gateway according to claim 21, wherein the message of the micro cell base station comprises: a message of a public measurement process and/or an information exchange process.

36. The base station gateway according to claim 22, wherein the ID comprises: a measurement ID, an information exchange ID, and/or a transaction ID.

37. A micro cell base station, comprising:
a writing-in unit, configured to add a micro cell feature to a message to be sent; and
a sending unit, configured to send a message carrying the micro cell feature to a corresponding macro cell node by using a base station gateway, so that the macro cell node processes and replies to the message according to the micro cell feature.

38. The micro cell base station according to claim 36, wherein the micro cell feature comprises any one of the following: a micro cell identity, a micro cell number, a micro cell base station identity, a dedicated ID or a micro cell number that the base station gateway allocates to the micro cell base station, or a dedicated ID or a micro cell number that a base station management system allocates to the micro cell base station.

39. The micro cell base station according to claim 37 or 38, further comprising:
a first obtaining unit, configured to obtain, before the writing-in unit adds a micro cell feature to a message to be sent, the micro cell feature that the base station gateway sends and allocates to the micro cell base station.

40. The micro cell base station according to claim 37 or 38, further comprising:
a second obtaining unit, configured to obtain the micro cell feature that the base station management system sends and allocates to the micro cell base station; and
a notifying unit, configured to send the micro cell feature to the base station gateway, so that the base station gateway transfers a message of the micro cell base station according to the micro cell feature.

41. A system for processing a message between a micro cell and a macro cell, comprising:
the base station gateway according to any one of claims 21 to 36;
a micro cell base station connected to the base station gateway; and
a macro cell node connected to the base station gateway.

42. A system for processing a message between a micro cell and a macro cell, comprising:
the micro cell base station according to any one of claims 37 to 40;
a base station gateway connected to the micro cell base station; and
a macro cell node connected to the base station gateway.
